# EUROPEAN PATENT SPECIFICATION

(11) **EP 3 789 194 B1**
(45) Date of publication and mention of the grant of the patent: **26.10.2022**
(21) Application number: 20194319.8
(22) Date of filing: 03.09.2020
(51) Int. Cl.: B32B 3/04, B32B 3/12, B32B 7/12, B32B 15/08, B32B 15/10, B32B 15/18, B32B 15/20, B32B 21/02, B32B 21/08, B32B 27/30, B32B 27/32

(54) **SELF-SUPPORTING PANEL**
SELBSTTRAGENDE PLATTE
PANNEAU AUTOPORTANT

(30) Priority: 06.09.2019 IT 201900015719
(43) Date of publication of application: 10.03.2021
(73) Proprietor: METALDESI S.R.L., 60044 Fabriano Ancona (IT)
(72) Inventor: Alcool, Michele, 60044 Fabriano Ancona (IT)
(74) Representative: Firmati, Leonardo

(56) References cited:
- FR-A1- 2 563 153
- FR-A1- 2 962 362

## Description

This invention relates to a self-supporting panel. More specifically, the invention relates to a quadrangular self-supporting panel, improved in such a way as to combine structural strength with lightness and workability characteristics.

The invention also relates to a method for making a quadrangular self-supporting panel.

The self-supporting panel according to the invention is advantageously used for making panelling and coverings for furnishings or also doors for furniture.

Many types of composite or sandwich panels are known in the prior art wherein various layers of different materials are superposed to obtain a product having particular technical and/or aesthetic features.

For example, the use of a honeycomb structure is known in the making of doors, closed between two layers of another material, for example plywood, so as to obtain a door which is very light in its entirety but certainly also very resistant in relation to the quantity of wood used.

The honeycomb structure used in the construction of doors is normally made with strips of cardboard glued to each other and shaped in such a way as to form a matrix of hexagonal cells, exactly like a honeycomb.

Honeycomb structures are also used in the construction of panels for the inner parts of aircraft, for example for the slab which divides the passenger area from the hold, or the partition walls between the various compartments of the cabin.

In the case of aircrafts, use is advantageously made of a honeycomb structure made of aluminium, which is very light but also able to give characteristics of considerable structural strength to the panel.

The honeycomb structure is preferably enclosed between two metal sheets made of aluminium alloy so as to at the same time guarantee a necessary lightness and a more than adequate and essential structural strength.

The prior art self-supporting panel solutions described above, although they have been used successfully for the purposes for which they were made, have not always been found to be satisfactory for close or similar purposes. For example, in the production of furniture panelling, metal panels of aeronautical origin have been found to be satisfactory for technical rooms (such as, for example, laboratories or operating rooms) but the same can certainly not be said where the appearance is of primary interest.

Similarly, the above-mentioned construction technique also used for doors has not been found to be easy to transfer, for example in the production of cupboard doors for kitchens since the stresses and the intense use which the latter are subjected to daily has not been found to be compatible with the technical features which this construction technique can guarantee.

Even in terms of fire resistance, the panels with honeycomb inserts used for the doors can certainly not guarantee a satisfactory performance.

Document FR 2 962 362 A1 describes a composite panel comprising a metal sheet, a honeycomb, and a covering wall made of plywood with a thickness of less than 10mm.

The aim of the invention is to provide a self-supporting panel which is able to overcome the drawbacks of the prior art and which is at the same time practical to use and simple and inexpensive to make.

A further aim is to provide a self-supporting panel which allows a high versatility of use, both where high technical performance is required and where a high level aesthetic result is required.

Another aim of the invention is to provide a method for making a self-supporting panel which is effective and practical and inexpensive to implement.

According to the invention, these aims and others are achieved by a self-supporting panel comprising the technical features described in the accompanying claims. The technical features of the invention, according to the above-mentioned aims, are clearly described in the appended claims and its advantages are apparent from the detailed description which follows, with reference to the accompanying drawings which illustrate non-limiting example embodiments of it, and in which:
- Figure 1 is a schematic perspective view, with some parts in cross-section in order to better illustrate others, of a first embodiment of the quadrangular self-supporting panel according to the invention;
- Figure 2 is an enlarged view of a detail of the panel of Figure 1;
- Figure 3 is an exploded side view of the self-supporting panel of Figure 1 with a further layer;
- Figure 4 is a schematic perspective view of the self-supporting panel of Figure 1;
- Figure 5 is a schematic perspective view, with some parts in cross-section to better illustrate others, of another embodiment of the self-supporting panel of the preceding drawings;
- Figure 6 is an enlarged view of a detail of the panel of Figure 5.

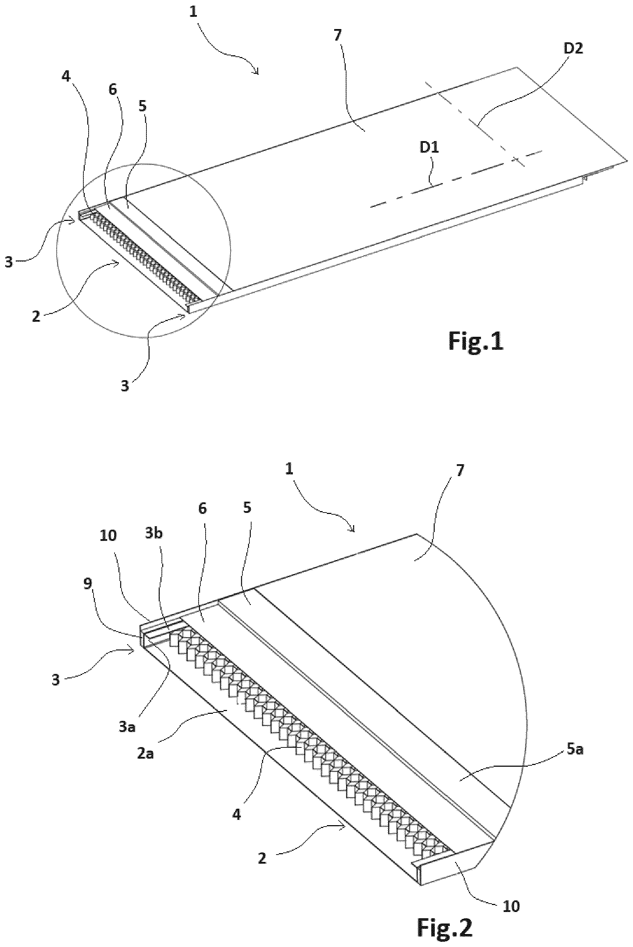

As illustrated in Figure 1, the numeral 1 denotes in its entirety a quadrangular self-supporting panel made in accordance with the invention.

The panel 1 illustrated in Figure 1 is rectangular in shape, mainly extending along a first predetermined longitudinal direction D1.

The short sides of the rectangle also extend along a second transversal direction D2, at right angles to the first direction D1.

With reference to Figures 1 and 2, the self-supporting quadrangular panel 1, hereinafter also referred to simply as the self-supporting panel 1 or panel 1, comprises a metal sheet 2 having two opposite lateral edges 3 folded into a C shape.

Advantageously, the metal sheet 2 is made of steel sheet. Alternatively, the metal sheet 2 is made of aluminium sheet or aluminium alloy sheet.

Further metallic materials, not indicated here, may be used.

The choice of the metallic material to be used for making the metal sheet 2 may depend on various requirements, such as, for example, the mechanical strength required, weight, cost or others.

By way of example, in terms of weight, if it must be limited, the choice of aluminium and aluminium alloys must be preferred whilst, where the cost must be limited, steel is, currently, without doubt preferable in terms of inexpensiveness.

According to the embodiment illustrated in Figures 1 to 3, the bent lateral edges 3 are the longitudinal edges of the metal sheet 2, parallel to the first direction D1 whilst the transversal edges are not bent, that is to say, those parallel to the second transversal direction D2.

The above-mentioned C-shaped edges 3 are advantageously obtained by so-called "folding" of the sheet.

Bending the sheet is a process performed by plastic deformation which makes it possible to obtain elements with an open cross-section, extending basically in the longitudinal direction.

This machining consists in subjecting the sheet to bending stress with a load greater than the elastic limit, in such a way as to deform it permanently.

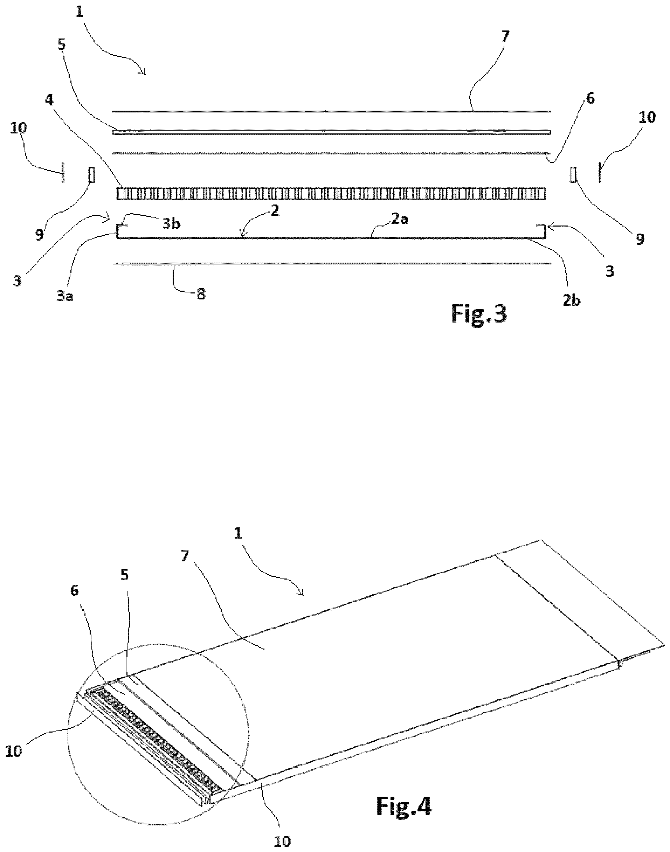

More in detail, with reference to Figure 3, wherein the metal sheet 2 is shown in a transversal cross-section, and it therefore extends mainly according to a plane of extension perpendicular to the plane of the drawing, the above-mentioned C-shaped edges 3 comprise a first portion 3a perpendicular to the above-mentioned plane of extension of the metal sheet 2 and a second portion 3b parallel to the plane of extension.

The above-mentioned plane of extension of the metal sheet 2 also defines a main plane of extension of the self-supporting panel 1 in its entirety.

Again with reference to Figures 1 and 2, the self-supporting panel 1 comprises a central honeycomb element 4 positioned in contact with an inner face 2a of the metal sheet 2.

The central honeycomb element 4 remains retained inside the above-mentioned lateral edges 3 folded into a C shape.

The central honeycomb element 4 is glued to the inner face 2a of the metal sheet 2.

The central honeycomb element 4 is advantageously made of aluminium or aluminium alloys.

As illustrated in Figure 2, the self-supporting panel 1 also comprises a covering wall 5 made of non-metallic sandable material, positioned on the opposite side of the metal sheet 2 relative to the central honeycomb element 4.

The concept of sandable material means here a material designed to be subjected to sanding operations, that is to say, the elimination of irregularities and roughness from a surface by means of an even just limited removal of material.

Currently, in the industrial processing of wood, for example, machines are used which simultaneously perform both the sanding of the panels and their calibration, thus removing material not only in the presence of surface irregularities and roughness but also when this is necessary to reach a predetermined uniform thickness. For the purposes of this description, the concept of sandable material is therefore that of material which can be subjected to a process for removal of material by sanding, both to eliminate surface irregularities and roughness and to calibrate it in accordance with predetermined dimensions.

The covering wall 5 made of non-metallic sandable material has a thickness greater than 2 mm since it must allow the removal of a part of material to compensate for any irregularities present, even of a geometrical type and not only surface irregularities. Advantageously, the covering wall 5 made of non-metallic sandable material has a thickness of between 3 and 6 mm.

The above-mentioned thickness of between 3 mm and 6 mm for the covering wall 5 represents an optimum range as it allows, on the one hand, to maintain a low weight of the self-supporting panel 1 in its entirety but at the same time guarantees the possibility of compensating, by sanding the covering wall 5, for even non-negligible irregularities, thereby even making panels fully useable which do not meet certain dimensional standards.

The non-metallic sandable material for making the covering wall 5 is selected between wood and its derivatives and polymeric plastic materials.

Basically, the sandable material must be non-metallic since, with metals, any processing for removal of material could clearly be very expensive.

Moreover, the provision of a large thickness of metallic material, even if in view of a possible partial removal thereof, would result in an evident increase in terms of weight of the panel.

Amongst the above-mentioned non-metallic materials, the selection may be made, if necessary, between those materials which provide a good compromise between weight and mechanical characteristics but, above all, allow an easy and precise sanding operation.

Some examples of materials used, in addition to wood, are MDF (Medium Density Fibreboard) amongst the wood derivatives, ABS (acrylonitrile-butadiene-styrene), PVC (polyvinyl chloride), PP (polypropylene) amongst the polymeric plastic materials.

With reference to the actual operations for removal of the material, with wood and its derivatives a sanding operation with the use of abrasive material will advantageously be considered.

On the other hand, the use of abrasive material with some plastic materials might be unsuitable for this method as it could generate results which are not entirely satisfactory due, for example, to the excessive heating which occurs locally on the surface being processed.

The selection of the material with which to make the covering wall 5 also depends on the degree of resistance to fire desired and/or the degree of extinguishing.

For example, the choice of a suitable type of MDF allows the reaching of a high degree of resistance to fire for the self-supporting panel 1 in its entirety.

According to the preferred embodiments illustrated in the accompanying drawings, the self-supporting panel 1 comprises an interposing layer 6 between the central honeycomb element 4 and the above-mentioned covering wall 5 made of non-metallic sandable material.

The interposing layer 6 is configured to allow gluing with the central honeycomb element 4 without this gluing adversely affecting the integrity of the covering wall 5.

In other words, in view of the need, in order to optimise the structural strength effects of the self-supporting panel 1, to stably connect the central honeycomb element 4 to the walls with which it confines, a very effective adhesive must be advantageously used.

The use of such an adhesive, for example of a polyurethane or vinyl type, whilst it may not cause any problem on the metal sheet 2, that cannot be safely said with reference to the covering wall 5 where this is made of MDF.

However, it is also possible, and it has in fact been found experimentally, that the withdrawal of the adhesive causes a widespread deformation on the covering wall 5 which could irrecoverably lose its substantial planarity, thus also adversely affecting in a definitive manner the life of the panel 1.

The use of an interposing layer 6, even though thin, but made of a material which is adequately rigid and preferably not porous, which therefore does suffer from stresses due to gluing, advantageously makes it possible to overcome the above-mentioned drawbacks.

With reference to Figures 1 and 2, the covering wall 5 has an outer face 5a, opposite the face facing towards the central honeycomb element 4.

The self-supporting panel 1 comprises a first finishing layer 7 positioned outside the covering wall 5 made of non-metallic sandable material, covering its outer face 5a.

The first finishing layer 7 is advantageously chosen being one chosen among a veneer, a layer of laminated material, a painting or lacquering.

The first finishing layer 7 represents and defines a first visible face of the self-supporting panel 1.

As illustrated in Figure 3 but not in the other drawings, the self-supporting panel 1 comprises a second finishing layer 8 positioned outside the metal sheet 2, that is to say, at an outer face 2b of the metal sheet 2, opposite the above-mentioned inner face 2a on which the central honeycomb element 4 is glued.

The second finishing layer 8, in a similar fashion to the first finishing layer 7 described above, is advantageously selected among a veneer, a layer of laminated material, a painting or lacquering.

The second finishing layer 8 represents and defines, when present, a second visible face of the self-supporting panel 1.

The presence of the second finishing layer may not be essential where the panels 1 must, for example, be fixed to the wall, which may therefore be performed with a direct contact between the wall to be coated and the outer face 2b of the metal sheet 2.

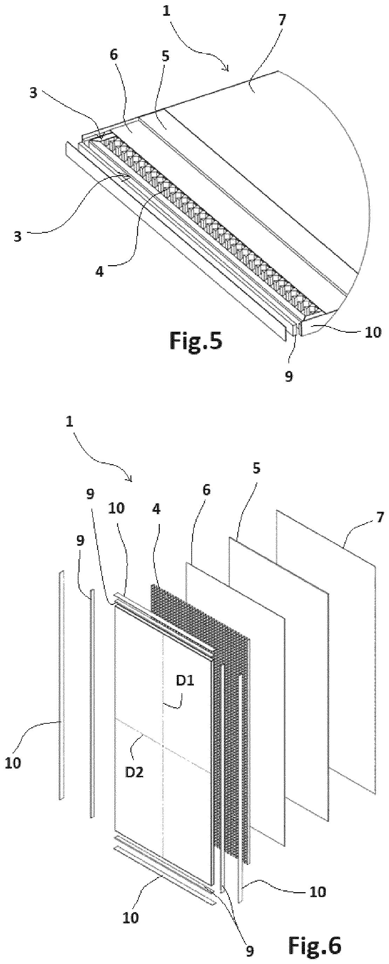

Also in the case of self-supporting panels 1 designed for use as doors of furniture such as those illustrated in Figures 4 to 6, the presence of the second finishing layer 8 is not strictly necessary, for example where a metal face 2b is expressly requested.

With reference to the accompanying drawings, the self-supporting panel 1 comprises respective laths 9 covering the above-mentioned lateral edges 3 folded into a C shape.

The covering laths 9 are fixed to the above-mentioned first portion 3a of the lateral edges 3, perpendicular to the main plane of extension of the self-supporting panel 1.

The covering laths 9 are fixed to the above-mentioned first portion 3a of the lateral edges 3 advantageously by gluing.

Alternative fixing methods also comprise the use of screws or similar connecting elements.

The covering laths 9 are made of non-metallic sandable material.

With regard to the definition of non-metallic sandable material, reference is made here to the covering laths 9 as described above with reference to the covering wall 5.

This is also the case both as regards the thickness of the covering laths 9 to be adopted and as regards the selection of the material used to make the covering laths 9, that is to say, selected between wood and its derivatives and polymeric plastic materials.

Again with reference to the accompanying drawings, the self-supporting panel 1 comprises a third finishing layer 10 positioned outside the above-mentioned laths 9 for covering the C-shaped lateral edges 3.

The third finishing layer 10, in a similar fashion to that described above with reference to the first and second finishing layers 7, 8, is a choice among a veneer, a layer of laminated material, a painting or lacquering. With reference to the embodiment illustrated in Figures 4 to 6, the metal sheet 2 has all its four perimeter lateral edges folded into a C shape.

On the four C-shaped lateral edges 3 there are respective covering laths 9 in such a way as to form a complete perimeter edge of the panel 1.

This embodiment is advantageously used for making doors of furniture, such as, for example, kitchen cupboard doors.

The doors for kitchen units made using self-supporting panels 1 of the type illustrated in Figure 4 allow, in effect, thanks to the presence of the four covering laths 9, a perfect squaring (by removal of material in a similar way to that described above with reference to the covering wall 4) which can compensate for and/or recover any imprecisions connected with the machining of the metal sheet 2.

As mentioned above, the invention also relates to a method for making a quadrangular self-supporting panel. The method comprises the following steps:
- preparing a metal sheet 2 having two opposite lateral edges 3 folded into a C shape or also all the four lateral edges folded into a C shape;
- preparing a central honeycomb element 4 positioned in contact with an inner face 2a of the metal sheet 2 and such as to remain retained inside the above-mentioned C-shaped lateral edges 3,
- preparing a covering wall 5 made of non-metallic sandable material, positioned on the opposite side of the metal sheet 2 relative to the central honeycomb element 4.

The step of preparing the metal sheet 2 with lateral edges folded into a C shape comprises the step of folding these edges by bending the sheet.

The method comprises the step of stably assembling the above-mentioned metal sheet 2, central honeycomb element 4 and covering wall 5.

The above-mentioned assembling step comprises one or more gluing steps.

The method according to the invention advantageously comprises the further step of inserting an interposing layer 6 between the central honeycomb element 4 and the covering wall 5.

The method according to the invention comprises the step of sanding the covering wall 5 made of non-metallic sandable material so that it adopts predetermined thickness and flatness characteristics.

The method according to the invention also comprises the following steps:
- preparing laths 9 for covering the lateral edges 3 folded in a C shape, with the covering laths 9 made of non-metallic sandable material,
- sanding the covering laths 9 to make the panel adopt the required dimensions and also the desired geometrical shape.

The self-supporting panel 1 according to the invention and the relative method for making overcome the above-mentioned drawbacks and achieve important advantages.

A first advantage linked to the invention is due to the fact of providing a panel with high levels of mechanical strength together with the possibility of adopting aesthetic finished even of high value.

A further advantage linked to the panel, and the relative method for making, according to the invention, is due to the possibility, as a function of the selection of some materials, of being able to offer even high fire resistance values.

## Claims

1. A quadrangular self-supporting panel, comprising:
- a metal sheet (2) having at least two opposite lateral edges (3) folded into a C shape,
- a central honeycomb element (4) positioned in contact with an inner face (2a) of said metal sheet (2) and such as to remain retained inside said C-shaped lateral edges (3),
- a covering wall (5) made of non-metallic sandable material, positioned on the opposite side of said metal sheet (2) with respect to said central honeycomb element (4), said covering wall (5) having a thickness greater than 2 mm.

2. The panel according to claim 1, **characterised in that** said non-metallic sandable material is a material selected between wood and its derivatives and polymeric plastic material.

3. The panel according to any one of the preceding claims, **characterised in that** it comprises a layer (6) interposed between said central honeycomb element (4) and said covering wall (5) made of non-metallic sandable material, said interposing layer (6) being configured to allow the gluing with said central honeycomb element (4) without said gluing adversely affecting the integrity of said covering wall (5).

4. The panel according to any one of the preceding claims, **characterised in that** it comprises a first finishing layer (7) positioned outside said covering wall (5) made of non-metallic sandable material, said first finishing layer (7) being one chosen among a veneer, a layer of laminated material, a painting or lacquering.

5. The panel according to any one of the preceding claims, **characterised in that** it comprises a second finishing layer (8) positioned externally to said metal sheet (2), said second finishing layer (8) being one chosen among a veneer, a layer of laminated material, a painting or lacquering.

6. The panel according to any one of the preceding claims, **characterised in that** it comprises laths (9) for covering said lateral edges (3) folded in a C shape, said covering laths (9) being fixed to a portion of said lateral edges (3) perpendicular to a plan of main extension of the panel, said covering laths (9) being made of non-metallic sandable material.

7. The panel according to claim 6, **characterised in that** it comprises a third finishing layer (10) positioned externally to said laths (9) for covering said C-folded lateral edges (3), said third finishing layer (10) being one chosen among a veneer, a layer of laminated material, a painting or lacquering.

8. The panel according to any one of the preceding claims, **characterised in that** said covering wall (5) made of non-metallic sandable material has a thickness of between 3 and 6 mm.

9. The panel according to any one of the preceding claims, **characterised in that** said metal plate (2) has all its four lateral edges (3) folded in a C shape.

10. A method for making a quadrangular self-supporting panel according to any one of claims 1 to 9, comprising the steps of:
- preparing a metal sheet (2) having at least two opposite C-shaped lateral edges (3),
- preparing a central honeycomb element (4) positioned in contact with an inner face (2a) of said metal sheet (2) and such as to remain retained inside the C-shaped lateral edges (3),
- preparing a covering wall (5) made of non-metallic sandable material, positioned on the opposite side of said metal sheet (2) with respect to said central honeycomb element (4),
- stably assembling said metal sheet (2), central honeycomb element (4) and covering wall (5),
- sanding said covering wall (5) made of non-metallic sandable material.

11. The method according to claim 10, comprising the step of preparing laths (9) for covering said C-folded lateral edges (3), said covering laths (9) being made of non-metallic sandable material, **characterised in that** it comprises the step of sanding said covering laths (9).

## Patentansprüche

1. Viereckige selbsttragende Platte, umfassend:
- ein Metallblech (2) aufweisend mindestens zwei gegenüberliegende Seitenränder (3), die in eine C-Form gefaltet sind,
- ein zentrales Wabenelement (4), das in Kontakt mit einer Innenfläche (2a) des Metallblechs (2) positioniert ist und um innerhalb der C-förmigen Seitenränder (3) gehalten zu bleiben,
- eine aus nichtmetallischem, schleifbarem Material bestehende Abdeckwand (5), die auf der gegenüberliegenden Seite des Metallblechs (2) in Bezug auf das zentrale Wabenelement (4) positioniert ist, wobei die Abdeckwand (5) eine Dicke von mehr als 2 mm aufweist.

2. Platte nach Anspruch 1, **dadurch gekennzeichnet, dass** das nichtmetallische schleifbare Material ein Material ist, das aus Holz und dessen Derivaten und polymerem Kunststoffmaterial ausgewählt ist.

3. Platte nach einem der vorhergehenden Ansprüche, **dadurch gekennzeichnet, dass** sie eine Schicht (6) umfasst, die zwischen dem zentralen Wabenelement (4) und der aus nichtmetallischem, schleifbarem Material bestehenden Abdeckwand (5) angeordnet ist, wobei die Zwischenschicht (6) so ausgelegt ist, dass sie das Verkleben mit dem zentralen Wabenelement (4) ermöglicht, ohne dass das Verkleben die Integrität der Abdeckwand (5) beeinträchtigt.

4. Platte nach einem der vorhergehenden Ansprüche, **dadurch gekennzeichnet, dass** sie eine erste Deckschicht (7) umfasst, die außerhalb der aus nichtmetallischem, schleifbarem Material bestehenden Abdeckwand (5) angeordnet ist, wobei die erste Deckschicht (7) aus einem Furnier, einer Schicht aus laminiertem Material, einem Anstrich oder einer Lackierung ausgewählt ist.

5. Platte nach einem der vorhergehenden Ansprüche, **dadurch gekennzeichnet, dass** sie eine zweite Deckschicht (8) umfasst, die außerhalb des Metallblechs (2) angeordnet ist, wobei die zweite Deckschicht (8) aus einem Furnier, einer Schicht aus laminiertem Material, einem Anstrich oder einer Lackierung ausgewählt ist.

6. Platte nach einem der vorhergehenden Ansprüche, **dadurch gekennzeichnet, dass** sie Leisten (9) zum Abdecken der Seitenränder (3) aufweist, die in einer C-Form gefaltet sind, wobei die Abdeckleisten (9) an einem Abschnitt der Seitenränder (3) senkrecht zu einer Haupterstreckungsebene der Platte befestigt sind, wobei die Abdeckleisten (9) aus einem nichtmetallischen, schleifbaren Material bestehen.

7. Platte nach Anspruch 6, **dadurch gekennzeichnet, dass** sie eine dritte Deckschicht (10) umfasst, die außerhalb der Latten (9) zum Abdecken der C-förmig gefalteten Seitenränder (3) positioniert ist, wobei die dritte Deckschicht (10) aus einem Furnier, einer Schicht aus laminiertem Material, einem Anstrich oder einer Lackierung ausgewählt ist.

8. Platte nach einem der vorhergehenden Ansprüche, **dadurch gekennzeichnet, dass** die aus nichtmetallischem, schleifbarem Material bestehende Abdeckwand (5) eine Dicke zwischen 3 und 6 mm aufweist.

9. Platte nach einem der vorhergehenden Ansprüche, **dadurch gekennzeichnet, dass** die Metallplatte (2) alle ihre vier Seitenränder (3) C-förmig gefaltet aufweist.

10. Verfahren zur Herstellung einer viereckigen selbsttragenden Platte nach einem der Ansprüche 1 bis 9, umfassend die Schritte:
- Vorbereiten eines Metallblechs (2) aufweisend mindestens zwei gegenüberliegende C-förmige Seitenrändern (3),
- Vorbereiten eines zentralen Wabenelements (4), das in Kontakt mit einer Innenfläche (2a) des Metallblechs (2) positioniert ist und um innerhalb der C-förmigen Seitenränder (3) gehalten zu bleiben,
- Vorbereiten einer aus nichtmetallischem schleifbarem Material bestehenden Abdeckwand (5), die auf der gegenüberliegenden Seite des Metallblechs (2) in Bezug auf das zentrale Wabenelement (4) positioniert ist,
- stabiles Montieren des Metallblechs (2), des zentralen Wabenelements (4) und der Abdeckwand (5),
- Schleifen der aus nichtmetallischem schleifbarem Material bestehenden Abdeckwand (5).

11. Verfahren nach Anspruch 10, umfassend den Schritt zum Vorbereiten von Leisten (9) zum Abdecken der C-förmig gefalteten Seitenränder (3), wobei die Abdeckleisten (9) aus nichtmetallischem, schleifbarem Material bestehen, **dadurch gekennzeichnet, dass** es den Schritt zum Schleifen der Abdeckleisten (9) umfasst.

## Revendications

1. Panneau autoportant quadrangulaire, comprenant :
- une feuille de métal (2) comportant au moins deux bords latéraux opposés (3) pliés en forme de « C »,
- un élément central à âme alvéolaire (4) positionné en contact avec une face intérieure (2a) de ladite feuille de métal (2) et de manière à rester retenu à l'intérieur desdits bords latéraux en forme de « C » (3),
- une paroi de recouvrement (5) constituée d'un matériau non métallique ponçable, positionnée sur le côté opposé de ladite feuille de métal (2) par rapport audit élément central à âme alvéolaire (4), ladite paroi de recouvrement (5) ayant une épaisseur supérieure à 2 mm.

2. Panneau selon la revendication 1, **caractérisé en ce que** ledit matériau non métallique ponçable est un matériau choisi entre le bois et ses dérivés et la matière plastique polymère.

3. Panneau selon l'une quelconque des revendications précédentes, **caractérisé en ce qu'**il comprend une couche (6) interposée entre ledit élément central à âme alvéolaire (4) et ladite paroi de recouvrement (5) en matériau non métallique ponçable, ladite couche d'interposition (6) étant configurée pour permettre le collage avec ledit élément central à âme alvéolaire (4) sans que ledit collage n'affecte négativement l'intégrité de ladite paroi de recouvrement (5).

4. Panneau selon l'une quelconque des revendications précédentes, **caractérisé en ce qu'**il comprend une première couche de finition (7) positionnée à l'extérieur de ladite paroi de recouvrement (5) en matériau non métallique ponçable, ladite première couche de finition (7) étant choisie parmi un placage, une couche de matériau stratifié, une peinture ou un laquage.

5. Panneau selon l'une quelconque des revendications précédentes, **caractérisé en ce qu'**il comprend une seconde couche de finition (8) positionnée à l'extérieur de ladite feuille de métal (2), ladite seconde couche de finition (8) étant choisie parmi un placage, une couche de matériau stratifié, une peinture ou un laquage.

6. Panneau selon l'une quelconque des revendications précédentes, **caractérisé en ce qu'**il comprend des lattes (9) pour recouvrir lesdits bords latéraux (3) pliés en forme de « C », lesdites lattes de recouvrement (9) étant fixées à une partie desdits bords latéraux (3) perpendiculaire à un plan d'extension principal du panneau, lesdites lattes de recouvrement (9) étant réalisées en matériau non métallique ponçable.

7. Panneau selon la revendication 6, **caractérisé en ce qu'**il comprend une troisième couche de finition (10) positionnée à l'extérieur desdites lattes (9) pour couvrir lesdits bords latéraux pliés en « C » (3), ladite troisième couche de finition (10) étant choisie parmi un placage, une couche de matériau stratifié, une peinture ou un laquage.

8. Panneau selon l'une quelconque des revendications précédentes, **caractérisé en ce que** ladite paroi de recouvrement (5) en matériau non métallique ponçable a une épaisseur comprise entre 3 et 6 mm.

9. Panneau selon l'une quelconque des revendications précédentes, **caractérisé en ce que** ladite plaque de métal (2) possède l'ensemble de ses quatre bords latéraux (3) pliés en forme de « C ».

10. Procédé de fabrication d'un panneau autoportant quadrangulaire selon l'une quelconque des revendications 1 à 9, comprenant les étapes de :
- préparer une feuille de métal (2) comportant au moins deux bords latéraux opposés en forme de « C » (3),
- préparer un élément central à âme alvéolaire (4) positionné en contact avec une face intérieure (2a) de ladite feuille de métal (2) et de manière à rester retenu à l'intérieur des bords latéraux en forme de « C » (3),
- préparer une paroi de recouvrement (5) composée d'un matériau non métallique ponçable, positionnée sur le côté opposé de ladite feuille de métal (2) par rapport audit élément central à âme alvéolaire (4),
- assembler de manière stable ladite feuille de métal (2), l'élément central à âme alvéolaire (4) et la paroi de recouvrement (5),
- poncer ladite paroi de recouvrement (5) constituée d'un matériau non métallique ponçable.

11. Procédé selon la revendication 10, comprenant l'étape consistant à préparer des lattes (9) pour recouvrir lesdits bords latéraux pliés en « C » (3), lesdites lattes de recouvrement (9) étant réalisées en matériau non métallique ponçable, **caractérisé en ce qu'**il comprend l'étape consistant à poncer lesdites lattes de recouvrement (9).
